# FASCICULE DE BREVET EUROPEEN

(11) **EP 4 136 474 B1**
(45) Date de publication et mention de la délivrance du brevet: **30.10.2024**
(21) Numéro de dépôt: 21717128.9
(22) Date de dépôt: 14.04.2021
(51) Int. Cl.: G01S 13/89, G01V 3/08, G01V 3/10, G01S 13/88, G01V 3/12

(54) **SCANNER CORPOREL DE SÉCURITÉ À ÉNERGIE RAYONNANTE ET PROCÉDÉ DE DÉTECTION ASSOCIÉ**
SICHERHEITSKÖRPERSCANNER MIT STRAHLUNGSENERGIE UND ZUGEHÖRIGES DETEKTIONSVERFAHREN
SECURITY BODY SCANNER EMPLOYING RADIANT ENERGY AND ASSOCIATED DETECTING METHOD

(30) Priorité: 14.04.2020 FR 2003724
(43) Date de publication de la demande: 22.02.2023
(73) Titulaire: Manneschi, Alessandro, 52100 Arezzo (IT)
(72) Inventeur: Manneschi, Alessandro, 52100 Arezzo (IT)
(74) Mandataire: Regimbeau
(86) Numéro de dépôt international: PCT/EP2021/059675
(87) Numéro de publication internationale: WO 2021/209505

(56) Documents cités:
- US-A- 6 094 472
- US-B2- 10 261 177

## Description

### DOMAINE DE L'INVENTION

La présente invention concerne le domaine des détecteurs conçus pour la détection d'objets ou matières non autorisés dans une zone à accès protégé.

La présente invention concerne tout particulièrement le domaine des scanners corporels conçus pour inspecter des individus, par exemple les passagers avant l'embarquement, dans des aéroports, ou encore des individus accédant à un site public, par exemple une enceinte de sport tel qu'un stade ou une salle de spectacle, afin de détecter des cibles interdites dissimulés sous les vêtements. De tels appareils permettent notamment d'éviter la palpation systématique.

### ETAT DE LA TECHNIQUE

Il apparaît aujourd'hui nécessaire de contrôler avec une grande fiabilité les tentatives d'introduction ou de sortie de produits interdits, notamment d'armes ou d'explosifs, dans ou hors d'une zone sensible. Le problème ainsi posé couvre un très large éventail de situations, qui englobe notamment et non limitativement la tentative d'introduction de produits interdits dans une zone protégée, tel qu'un aéroport, un magasin, une école, une gare, un organisme public voir privé, ou la tentative de sortie de produits hors d'un périmètre défini, par exemple en cas de vol dans une entreprise ou sur un site protégé.

Différents types de détecteurs d'objet en métal existent. Il a notamment été proposé depuis de nombreuses années des portiques de détection d'objets métalliques à ondes continues (« continuous wave » en anglais), c'est-à-dire des portiques utilisant des ondes d'amplitude et de fréquence constantes dans des gammes de fréquence comprises entre 70 Hz et 50 kHz typiquement. Ils comprennent au moins un bobinage émetteur et au moins un bobinage récepteur. Le bobinage émetteur est alimenté par un courant électrique alternatif. Le bobinage récepteur est conçu pour détecter des perturbations du champ magnétique généré par le bobinage émetteur dues à la présence d'un objet métallique, par exemple l'atténuation de l'amplitude du champ magnétique, voire le changement de phase du signal, dus par exemple aux courants de Foucault générés sur l'objet métallique.

Il a également été proposé d'utiliser des scanners corporels. Les scanners corporels les plus anciens sont des scanners corporels à rayons X. Des scanners corporels plus récents utilisent la technologie des ondes dites millimétriques (ou microondes). On trouvera un exemple de scanner corporel dans le document EP 2 202 700.

Depuis plusieurs années, des scanners corporels (généralement désignés par leur terminologie anglosaxonne « body scanner ») ont été développés afin de détecter des armes, des explosifs, etc. cachés sous les vêtements d'individus pénétrant dans une zone protégée. Ces scanners utilisent des technologies basées sur la détection d'énergies de rayonnement modulées, réfléchies ou émises par le corps des individus inspectés. Les énergies de rayonnement ainsi utilisées comprennent les rayons X, les microondes, les ondes millimétriques, la lumière infrarouge, les ondes térahertz et les ultrasons.

Quel que soit le type d'énergie rayonnante et de géométrie d'imagerie, ces scanners corporels ont tous pour principe la création d'une image électronique de l'individu sur laquelle les vêtements de l'individu sont transparents. Cette image est ensuite affichée sur un écran et visualisée par un opérateur afin que celui-ci détermine si l'individu porte un objet cible. Pour cela, l'opérateur, qui est formé à la détection d'objets cibles, doit être capable de déterminer si les objets identifiés par le scanner corporel correspondent à l'anatomie humaine, à un objet autorisé tel qu'un briquet, un mouchoir ou encore des pièces, ou à un objet cible tel qu'une arme ou un explosif. En variante, afin de respecter l'intimité des personnes inspectées, le système peut comprendre un logiciel comprenant des instructions de code pour analyser automatiquement l'image et déterminer la présence d'éventuelles anomalies et les afficher sur un avatar représentant la personne.

Il s'avère de nos jours que les individus qui tentent d'introduire frauduleusement un objet interdit, notamment une arme, dans une zone protégée font preuve de beaucoup d'imagination pour dissimuler lesdits objets, par exemple séparent l'objet en différentes pièces qu'ils répartissent sur le corps. L'examen à l'aide de scanners corporels devient en conséquence de plus en plus complexe et long à réaliser si l'objet cible a été dissimulé de façon à être difficilement atteignable par l'énergie de rayonnement. En particulier, il ressort de qu'autant le balayage de la face avant et de la face arrière de la personne inspectée est dense, ce qui assure une détection fiable par le scanner corporel, autant le balayage des parties latérales de la personne inspectée est moindre. En effet, l'intensité de l'énergie réfléchie par ces parties est très faible et, en raison de leur position par rapport aux transducteurs, une grande partie des ondes sont réfléchies en dehors du plan dans lequel se trouvent les transducteurs d'émission et de réception. Ces ondes réfléchis ne peuvent donc pas participer à la réalisation de l'image électronique. Ce risque est d'autant plus grand que la surface de la partie latérale (c'est-à-dire la distance entre sa face avant et sa face arrière) de la personne à inspecter est grande.

Afin de réduire ce risque, il a été proposé d'augmenter la sensibilité du scanner corporel. Toutefois, une telle augmentation de la sensibilité s'accompagne nécessairement d'une augmentation des fausses alarmes, et donc des palpations opérées par les agents de sûreté. En plus de ralentir drastiquement la durée de l'inspection de la personne et donc l'efficacité du processus d'inspection, cette palpation est souvent perçue comme gênante par les personnes à inspecter.

Il a également été proposé d'ajouter des transducteurs spécifiquement destinés à balayer ces zones dissimulées afin d'améliorer l'exposition au rayonnement de ces zones. Toutefois, cela implique une augmentation significative du nombre de ressources et du coût de système en comparaison avec le nombre de ressources nécessaire pour explorer les faces avant et arrière du corps de la personne à inspecter, qui sont directement exposées au rayonnement des antennes. De plus, l'augmentation du nombre de transducteurs implique nécessairement une augmentation de la durée du traitement des signaux issus de ces transducteurs pour obtenir une réponse significative des parties latérales de la personne à inspecter. Ce traitement, en termes de ressources utilisées et de temps de balayage, est très peu efficace en comparaison avec l'imagerie des faces du corps qui sont parallèles aux transducteurs (généralement la face avant et la face arrière) qui répondent, au contraire, avec une intensité beaucoup plus élevée et dans la même direction des transducteurs d'émission et de réception.

Il a aussi été proposé de placer successivement plusieurs types de détecteurs, par exemple un détecteur de métal et un scanner corporel. Toutefois, même si les détecteurs de métal existants sont la solution la plus performante quant à la détection de l'existence ou non d'un objet métallique, indépendamment de leur position par rapport à la personne inspectée, ils ne peuvent pas effectuer la localisation d'un objet non métallique sur un individu. En cas de dissimulation d'un objet cible non métallique dans les zones difficiles d'accès par le scanner corporel, il existe donc toujours un risque que l'objet cible ne soit pas identifié.

Enfin, il a été proposé de réaliser un portique comprenant des moyens de détection mobiles en rotation montés dans une paroi cylindrique. La rotation des moyens de détection permet ainsi de balayer circonférentiellement la personne à inspecter de sorte à obtenir une image complète de cette personne. Toutefois, il présente un empâtement au sol important, compte-tenu de sa forme cylindrique, peut être impressionnant pour les personnes inspectées, et le temps de balayage et de traitement des informations ainsi relevées peut être long. De plus, le balayage circonférentiel de la personne inspectée ne peut pas être complet puisque le système doit prévoir deux ouvertures pour permettre l'entrée et la sortie de la personne à inspecter. Dans les systèmes existants sur le marché, l'angle de balayage total est d'au plus 240 degrés, de sorte que la personne n'est pas inspectée sur 60 degrés en correspondance de l'entrée et sur 60 degrés en correspondance de la sortie.

D'autres propositions encore ont été décrites dans les brevets US10261177 et US6094472.

### EXPOSE DE L'INVENTION

Un but de l'invention est de proposer un procédé de détection et détecteur associé à énergie rayonnante pour la détection d'objets cibles qui pallie les inconvénients précités.

En particulier, un but de l'invention est de proposer un procédé de détection et un détecteur à énergie rayonnante associé capables de détecter de manière plus fiable des objets cibles portées par une personne, même lorsque ces cibles sont situées dans des zones qui sont plus difficiles à explorer par une énergie rayonnante, qui permette de réduire le nombre de ressources nécessaires pour la mise en oeuvre du procédé tout en restant rapide, efficace et avec un taux de fausses alarmes réduit.

Il est à cet effet proposé, selon un premier aspect de l'invention, un procédé de détection d'un objet cible à l'aide d'un détecteur à énergie rayonnante, dans lequel le détecteur comprend deux panneaux latéraux opposés, lesdits panneaux latéraux étant fixes et délimitant ensemble un passage,
le procédé de détection comprenant les étapes suivantes :
S1 : placement d'une personne à inspecter dans une première position au sein du passage entre les panneaux latéraux du détecteur ;
S2 : acquisition de premiers signaux représentatifs d'une énergie rayonnante lorsque la personne à inspecter est dans la première position ;
S3 : placement de la personne à inspecter dans une deuxième position au sein du passage entre les panneaux latéraux du détecteur, la deuxième position étant différente de la première position ; et
S4 : acquisition de deuxièmes signaux représentatifs d'une énergie rayonnante lorsque la personne à inspecter est dans la deuxième position : et
S5 : à partir des premiers signaux et des deuxième signaux, réalisation d'une image électronique de sorte à déterminer si la personne à inspecter porte un objet cible; dans lequel, au cours de l'une parmi les étapes S1 et S3, la personne à inspecter est placée face à l'un des panneaux latéraux et au cours de l'autre parmi les étapes S1 et S3 la personne à inspecter est placée perpendiculairement aux panneaux latéraux.

Certaines caractéristiques préférées mais non limitatives du procédé de détection selon le premier aspect sont les suivantes, prises individuellement ou en combinaison :
- entre la première position et la deuxième position, la personne inspectée pivote sur elle-même suivant un angle qui est différent de 180° ;
- entre la première position et la deuxième position, la personne inspectée pivote d'un quart de tour ;
- le procédé comprend en outre, préalablement à l'étape S3, une étape S6 d'envoi d'instructions à la personne inspectée pour la faire passer de la première position à la deuxième position ;
- au cours de l'étape S6, les instructions sont visuelles et/ou sonores ;
- au cours de l'étape S1 et/ou S3, la personne inspectée place ses bras à distance de son corps ;
- le procédé comprend en outre une étape de traitement par une unité centrale des premiers signaux et des deuxièmes signaux de sorte à détecter un objet cible porté par la personne à inspecter ;
- les premiers signaux sont transmis à l'unité centrale préalablement à l'étape S4 ;
- les premiers signaux sont traités pendant tout ou partie des étapes S3 et S4 ; et/ou
- l'unité centrale combine les premiers signaux et les deuxièmes signaux de sorte à générer une image électronique unique de la personne à inspecter.

Selon un deuxième aspect, l'invention propose un détecteur à énergie rayonnante comprenant :
- deux panneaux latéraux opposés fixes l'un par rapport à l'autre et délimitant ensemble un passage ;
- des transducteurs à énergie rayonnante, par exemple des antennes microondes, logés dans au moins un des panneaux latéraux ; et
- une unité centrale configurée pour mettre en oeuvre un procédé de détection selon le premier aspect.

Certaines caractéristiques préférées mais non limitatives du détecteur selon le deuxième aspect sont les suivantes, prises individuellement ou en combinaison :
le détecteur comprend en outre un indicateur visuel et/ou sonore, l'unité centrale étant configurée pour envoyer des instructions à l'indicateur visuel et/ou sonore pour faire passer une personne à inspecter de la première position à la deuxième position ;
l'indicateur visuel comprend l'un au moins des moyens suivants : une ou plusieurs lumières placée(s) dans une plateforme s'étendant entre les panneaux latéraux ; un projecteur configuré pour projeter une ou plusieurs images sur la plateforme et/ou sur au moins un panneau latéral ; un haut-parleur configuré pour émettre un message sonore à l'attention de la personne à inspecter ; et/ou

- les panneaux latéraux présentent chacune une face interne orientée vers le panneau latéral opposé, lesdites faces internes étant courbes.

### DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :
La figure 1 illustre de façon schématique détecteur selon un premier mode de réalisation de l'invention. Sur cette figure, la personne à inspecter est placée dans une première position et les surfaces de la personne susceptibles d'être explorées par des transducteurs à rayonnement ont été représentées schématiquement.
La figure 2 illustre de façon schématique le détecteur de la figure 1, lorsque la personne à inspecter est placée dans une deuxième position. Les surfaces de la personne susceptibles d'être explorées dans cette deuxième position par des transducteurs à rayonnement ont été représentées schématiquement.

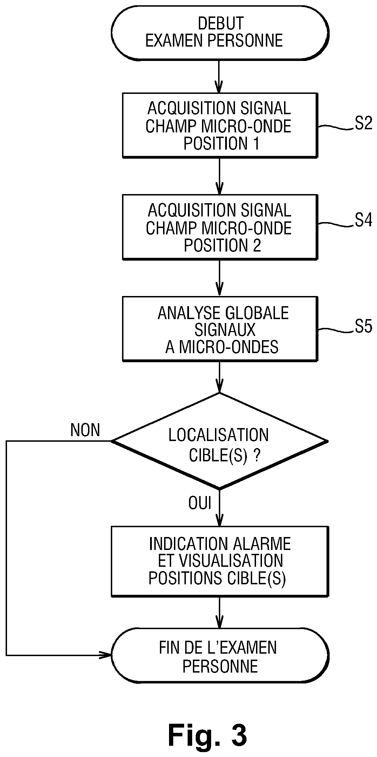

Les figures 3 et 4 sont des organigrammes d'étapes d'un procédé de détection selon un mode de réalisation de l'invention.
La figure 5 est un organigramme illustrant d'étapes d'un procédé de détection selon un mode de réalisation de l'invention, dans lequel un exemple de détecteur conforme à l'invention et la position d'une personne inspectée ont été illustrés en vue en coupe.

Sur l'ensemble des figures, les éléments similaires portent des références identiques.

### DESCRIPTION DETAILLEE DE L'INVENTION

Un détecteur 1 d'objets cibles à énergie rayonnante conforme à l'invention comprend deux panneaux latéraux 2 opposés qui sont fixes et délimitent ensemble un passage formant un canal de transit pour une personne à inspecter. Les panneaux latéraux 2 sont sensiblement symétriques par rapport à un plan central P (plan de symétrie fictif). Dans une forme de réalisation, les panneaux latéraux 2 sont raccordés au niveau de leur bord supérieur par un plafond et/ou au niveau de leur bord inférieur par une plateforme 4 de sorte à être monoblocs. En variante, les panneaux latéraux 2 peuvent être séparés et distincts, c'est-à-dire non reliés via un plafond ni une plateforme 4.

Chaque panneau latéral 2 présente une face interne 3, orientée vers le passage. Plus précisément, la face interne 3 du premier panneau latéral 2 fait face à la face interne 3 du deuxième panneau latéral 2 de sorte à délimiter latéralement le passage.

Le détecteur 1 comprend en outre une série de transducteurs émetteurs/récepteurs 5 à énergie rayonnante et une unité centrale 6 configurée pour recevoir des signaux représentatifs de l'énergie rayonnante réfléchie et mesurée par les transducteurs 5 et en déduire une image électronique.

Les transducteurs 5 sont disposés au niveau de la face interne 3 d'au moins un des panneaux latéraux 2, de préférence de chaque panneau latéral 2. Chaque transducteur peut former successivement un émetteur configuré pour générer une énergie rayonnante et un récepteur configuré pour recevoir une énergie rayonnante.

Dans une forme de réalisation, chaque transducteur comprend une antenne 5 configurée pour générer une énergie rayonnante du type onde millimétrique (également appelée onde microonde), rayon X, onde térahertz, etc.

Dans ce qui suit, l'invention sera plus particulièrement décrite dans le cas où les transducteurs 5 comprennent des antennes microondes 5, c'est-à-dire des antennes 5 configurées pour générer des ondes dont la longueur est comprise entre 3 mm et 20 mm inclus (soit une plage de fréquence allant de 15 GHz à 100 GHz environ), sans que cela ne soit limitatif. Les ondes microondes sont en effet adaptées pour la détection d'objets métalliques et non métalliques, tels que par exemple des objets en céramique. En outre, l'air et d'autres matériaux, tels que ceux utilisés pour les vêtements, sont transparents pour ces rayonnements. Il en découle que les ondes microondes peuvent être utilisées pour la détection d'objets dissimulés sous les vêtements. En vue de détecter des objets cibles, les antennes microondes 5, en tant qu'émetteurs, génèrent des impulsions ou un balayage en fréquence d'ondes microondes. L'énergie réfléchie de chaque partie de la personne est alors mesurée par les antennes microondes 5, en tant que récepteurs, qui transmettent alors à l'unité centrale 6 un signal représentatif de cette énergie réfléchie qui l'analyse pour générer une image électronique de la personne inspectée, sur laquelle ses vêtements sont essentiellement transparents. Le cas échéant, le détecteur 1 comprend en outre une interface réseau configurée pour recevoir les signaux représentatifs de l'énergie réfléchie et les transmettre à l'unité centrale 6.

L'unité centrale 6 peut notamment comprendre un calculateur de type processeur, microprocesseur, microcontrôleur, etc., configuré pour exécuter des instructions de code en vue de traiter les signaux représentatifs de l'énergie rayonnante réfléchie et mesurée par les transducteurs 5 et en déduire l'image électronique.

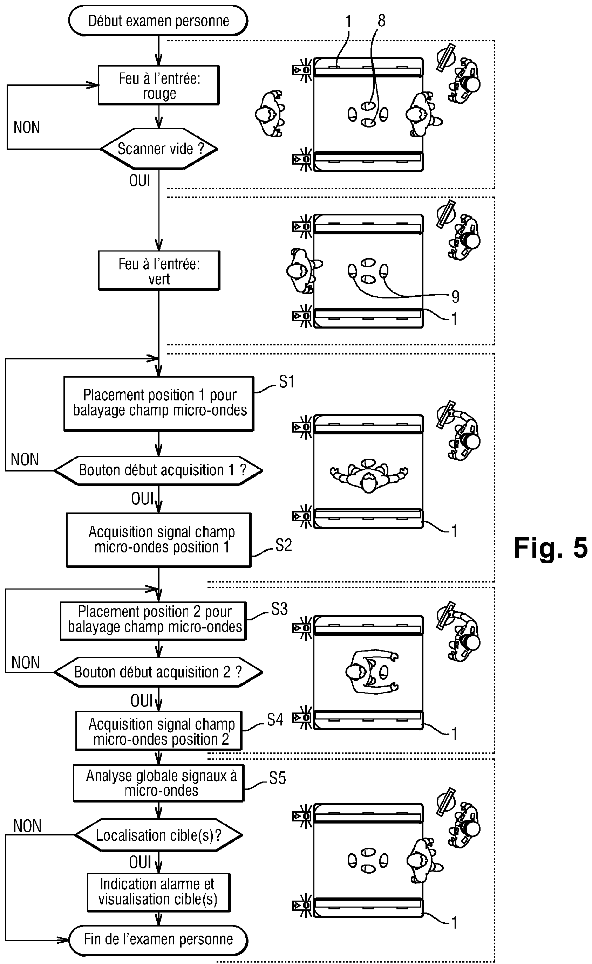

Optionnellement, le détecteur 1 comprend en outre des moyens de détection de présence, par exemple une barrière optique placée à l'entrée du détecteur 1. Le cas échéant, le détecteur 1 comprend en outre une signalisation, pouvant être placée à l'entrée du détecteur 1 et synchronisée avec les moyens de détection de présence, afin d'indiquer à la personne inspectée si elle peut entrer dans le détecteur 1. La signalisation peut par exemple être du type feu vert/feu rouge (voir Fig. 5).

Afin d'améliorer la détection d'objets cibles, l'inspection d'une personne est réalisée conformément aux étapes suivantes :
S1 : placement d'une personne à inspecter dans une première position au sein du passage entre les panneaux latéraux 2 du détecteur 1 ;
S2 : acquisition de premiers signaux représentatifs d'une énergie rayonnante lorsque la personne à inspecter est dans la première position ;
S3 : placement de la personne à inspecter dans une deuxième position au sein du passage entre les panneaux latéraux 2 du détecteur 1, la deuxième position étant différente de la première position ; et
S4 : acquisition de deuxièmes signaux représentatifs d'une énergie rayonnante lorsque la personne à inspecter est dans la deuxième position : et
S5 : à partir des premiers signaux et des deuxième signaux, réalisation d'une image électronique de sorte à détecter un objet cible porté par la personne à inspecter.

Plus précisément, au cours de l'étape S1, la personne inspectée est placée dans le détecteur 1, entre les panneaux latéraux 2, dans une première position.

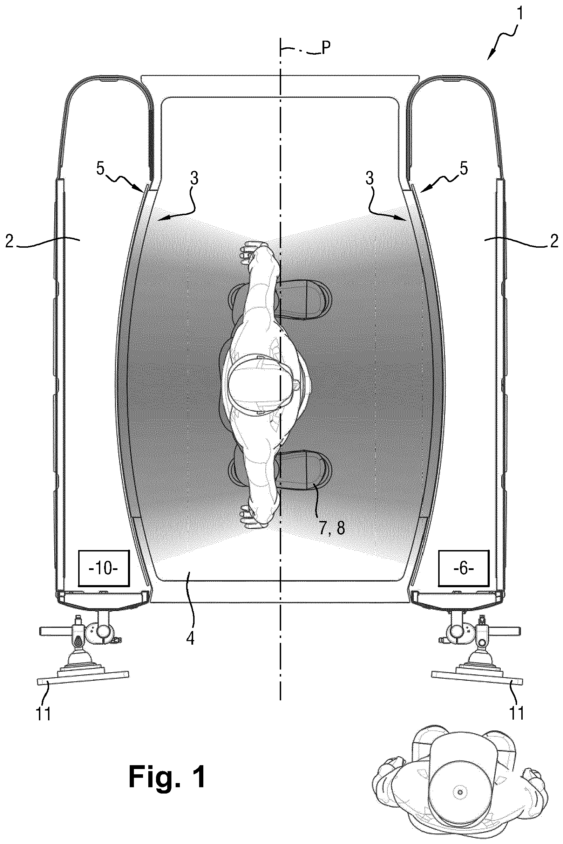

Cette première position peut être conventionnelle et correspondre par exemple à une position dans laquelle la personne à inspecter est placée face à l'un des panneaux latéraux 2, globalement dans le plan central P, les jambes écartées sensiblement parallèlement à ce plan central P. La personne peut laisser ses bras le long du corps ou en variante les écarter, dans le plan central P. Cette première position a été illustrée en figure 1.

Dans cette première position, les antennes 5 sont donc susceptibles de générer des ondes microondes balayant la face avant (respectivement, la face arrière) de la personne inspectée, de sorte que la première image électronique obtenue représente la face avant (respectivement, la face arrière) de la personne à inspecter.

Au cours de l'étape S2, tout ou partie des antennes microondes 5 logées dans le premier panneau latéral 2 et/ou le deuxième panneau latéral 2 génèrent et émettent des impulsions ou des trains d'ondes microondes en direction du passage. Ces ondes microondes interagissent avec la surface en regard, à savoir le corps de la personne à inspecter, ses vêtements et tout objet éventuellement dissimulé par cette personne sous ses vêtements ainsi que la face interne 3 du panneau latéral 2 en regard. Cette interaction module l'énergie des ondes microondes qui, une fois réfléchies, retournent sur la ou les antennes 5, qui font office de récepteur.

L'énergie réfléchie de chaque partie de la personne à inspecter est mesurée par les antennes 5, en tant que récepteurs. Chaque antenne 5 transmet alors à l'unité centrale 6 un premier signal représentatif de cette énergie réfléchie (étapes 2.1 et S4.1) en vue de son traitement et de la réalisation de l'image électronique de la personne à inspecter (étape S5). Le cas échéant, cette transmission peut être réalisée via une interface réseau.

Au cours de l'étape S3, la personne est placée dans une deuxième position, distincte de la première position. Dans une forme de réalisation, la personne à inspecter pivote sur elle-même entre la première position et la deuxième position, l'objectif étant de positionner une surface différente du corps face aux panneaux latéraux 2. L'angle de pivotement entre la première position et la deuxième position est donc différent de 180°, notamment lorsque les deux panneaux latéraux 2 logent des antennes microondes 5 (les antennes 5 d'un des panneaux permettant de générer une image électronique de la face avant de la personne et les antennes 5 de l'autre des panneaux permettant de générer une image électronique de la face arrière de la personne).

Dans une forme de réalisation, la personne à inspecter fait un quart de tour pour passer de la première position à la deuxième position, de sorte que l'angle entre la première position et la deuxième position est égal à environ 90° (à 20 degrés près) (modulo 180°). Avantageusement, lorsque la deuxième position est sensiblement perpendiculaire à la première position, les surfaces latérales de la personne à inspecter, qui étaient perpendiculaires aux faces internes 3 des panneaux latéraux 2 pendant l'étape d'acquisition S2, se trouvent face aux panneaux latéraux 2 pendant l'étape d'acquisition S4. Cela améliore donc la capacité des antennes microondes 5 à explorer les faces latérales de la personne à inspecter et augmente l'intensité de l'énergie réfléchie par ces faces latérales dans l'étape S4, en comparaison avec l'énergie réfléchie par ces mêmes parties pendant l'étape S2. Il en découle que le nombre de ressources (antennes microondes 5) nécessaires pour améliorer la détection dans ces zones peut être réduit, tout comme la durée de traitement des premiers signaux et des deuxièmes signaux.

Afin d'améliorer l'exploration de ses faces latérales dans la deuxième position, la personne peut lever ses bras de sorte à les placer face à elle ou sur les côtés, à hauteur de ses épaules, sensiblement parallèlement au sol. Dans cette deuxième position, les bras levés, les antennes 5 sont donc susceptibles de balayer toute la face latérale droite (respectivement, la face latérale gauche) de la personne inspectée, de sorte que la deuxième image électronique obtenue représente la face latérale droite (respectivement, la face latérale gauche) de la personne à inspecter.

L'étape S4 est globalement identique à l'étape S2, à l'exception de la position de la personne à inspecter (placée dans la deuxième position plutôt que dans la première position). Ainsi, à l'issue de cette étape, chaque antenne 5 transmet à l'unité centrale 6 un deuxième signal représentatif de l'énergie réfléchie par la personne inspectée dans la deuxième position en vue de son traitement par l'unité centrale 6 et de la réalisation de l'image électronique. Le cas échéant, cette transmission peut être réalisée via une interface réseau.

L'étape S4 peut être initiée automatiquement par l'unité centrale 6. Par exemple, le détecteur 1 peut comprendre des moyens de détection (barrières photovoltaïques, détection de présence, etc.) placés dans le sol ou dans les panneaux latéraux 2 configurés pour déterminer si la personne à inspecter est dans la deuxième position. En variante, l'étape S4 peut être initiée manuellement par un agent de sûreté, par exemple par appui sur un bouton d'acquisition, lorsque la personne est placée correctement dans la deuxième position.

Dans une forme de réalisation, le procédé comprend en outre une étape S6 au cours de laquelle l'unité centrale 6 envoie des instructions à un ou plusieurs indicateurs 7 configurés pour guider la personne inspectée et la placer dans la première position et/ou dans la deuxième position. Ces indicateurs peuvent par exemple être visuels et/ou sonores. L'unité centrale 6 permet ainsi de coordonner les étapes S1 et S3 de placement avec les étapes S2 et S4 d'acquisition.

Dans un premier mode de réalisation, l'indicateur 7 comprend une ou plusieurs lumières placées dans la plateforme 4 du détecteur 1 et configurées pour recevoir des instructions d'allumage et d'extinction de l'unité centrale 6.

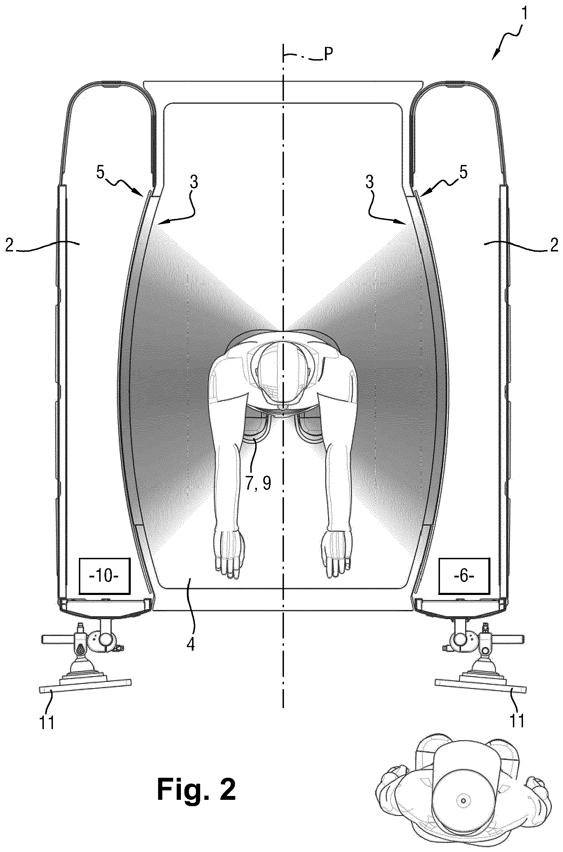

Par exemple, comme illustré sur les figures 1 et 2, le détecteur 1 peut comprendre une série de diodes électroluminescentes (DEL) 7, positionnées de sorte à former deux jeux d'empreintes de chaussure, un premier jeu 8 correspondant à la position des pieds de la personne à inspecter dans la première position (par exemple face à l'un des panneaux latéraux 2), dans le plan central P, le deuxième jeu 9 correspondant à la position des pieds de la personne à inspecter dans la deuxième position (par exemple perpendiculairement aux panneaux latéraux 2 et au plan central P). Lorsque la personne à inspecter entre dans le détecteur 1 et/ou pendant l'étape S1, les DEL formant le premier jeu 8 d'empreintes sont allumées afin de guider la personne à inspecter et de l'aider à se positionner correctement dans la première position au sein du détecteur 1, en vue de l'acquisition de la première image électronique pendant la phase S2. Suite à l'étape S2, ces DEL sont éteintes. Afin de garantir que la personne à inspecter se place correctement dans la deuxième position à l'étape S3, les DEL formant le deuxième jeu 9 d'empreinte sont allumées entre le moment où les DEL formant le premier jeu 8 d'empreintes sont éteintes et le début de l'étape S3. De la sorte, la personne à inspecter est incitée à pivoter sur elle-même pour placer ses pieds dans le deuxième jeu 9 d'empreintes et se positionner ainsi dans la deuxième position. Enfin, les DEL formant le deuxième jeu 9 d'empreinte sont éteintes avant l'étape S5, par exemple à la fin de l'étape S4.

Bien évidemment, on comprendra que, dans une variante de réalisation, le premier jeu 8 d'empreintes et le deuxième jeu 9 d'empreintes peuvent rester allumés simultanément pendant tout le procédé de détection (comme cela est représenté par exemple sur la figure 5), la personne à inspecter étant invitée à positionner ses pieds dans l'un ou l'autre jeu par des indications orales formulées par un agent de sûreté ou diffusées par un haut-parleur.

Dans un deuxième mode de réalisation, l'indicateur 7 du détecteur 1 comprend un projecteur configuré pour projeter une ou plusieurs images sur la face interne 3 d'un des panneaux latéraux 2 et/ou sur la plateforme 4. La ou les images projetées sur la face interne 3 peuvent notamment avoir pour fonction de fournir des renseignements quant à la séquence de positions ainsi que leur enchainement lors de la mise en oeuvre du procédé de détection. Les images projetées sur la plateforme 4 peuvent correspondre à un premier jeu 8 d'empreintes et un deuxième jeu 9 d'empreintes dont les étapes successives de projection sur la plateforme 4 correspondent aux étapes d'allumages et d'extinction des DEL formant les premier et deuxième jeu 9x d'empreintes décrits dans le premier mode de réalisation.

Dans un troisième mode de réalisation, l'indicateur 7 du détecteur 1 est sonore et comprend un haut-parleur 10, qui peut être fixé directement sur le détecteur 1 ou être placé à distance de celui-ci. Le haut-parleur 10 est alors configuré pour émettre un message sonore à l'attention de la personne à inspecter. Par exemple, lorsque la personne à inspecter entre dans le détecteur 1 et/ou pendant l'étape S1, le haut-parleur 10 émet un message sonore pour guider la personne à inspecter et l'aider à se positionner correctement dans la première position au sein du détecteur 1, en vue de l'acquisition de la première image électronique pendant la phase S2. Afin de garantir que la personne à inspecter se place correctement dans la deuxième position, le haut-parleur 10 émet un message sonore suite à l'étape S2 pour inviter la personne à inspecter à pivoter sur elle-même, par exemple d'un quart de tour, et se positionner dans la deuxième position. Optionnellement, après l'étape S4, le haut-parleur peut émettre un message sonore pour inviter la personne à sortir du détecteur 1.

En variante, les instructions sont transmises oralement à la personne à inspecter par un agent de sûreté, qui demande directement à la personne à inspecter de passer de la première position à la deuxième position.

On comprendra que les premier, deuxième et troisième modes de réalisation de l'indicateur 7 sont cumulables (combinaison d'un haut-parleur 10 ou des instructions orales avec des lumières 8, 9 et/ou un projecteur).

Au cours de l'étape S5, l'unité centrale 6 traite les premiers signaux et les deuxièmes signaux représentatifs de l'énergie rayonnante réfléchie et réalise une ou plusieurs images électroniques.

Typiquement, l'unité centrale 6 peut réaliser une ou des première(s) image(s) électronique(s) et une ou des deuxième(s) image(s) électronique(s) (lorsque chaque panneau latéral 2 comprend des antennes microondes 5 jouant alternativement le rôle d'émetteur et de récepteur) à partir des premiers et deuxièmes signaux générés par les antennes 5 de chaque panneau latéral 2 aux étapes S1 et S3, respectivement.

En variante, et comme nous le verrons dans ce qui suit, l'unité centrale 6 peut être configurée pour réaliser une unique image électronique à partir des premiers et deuxièmes signaux. Cette unique image électronique peut être du type « elliptique » ou « développée » et reproduire la surface de la personne à inspecter sur 360° (en particulier lorsque chaque panneau latéral 2 comprend des antennes microondes 5).

Afin d'améliorer l'efficacité et la rapidité du procédé de détection, dans une forme de réalisation, au cours d'une étape S2.1 préalable à l'étape S4, les premiers signaux sont transmis à l'unité centrale 6. De préférence, ces premiers signaux sont transmis par les antennes microondes 5 dès leur acquisition.

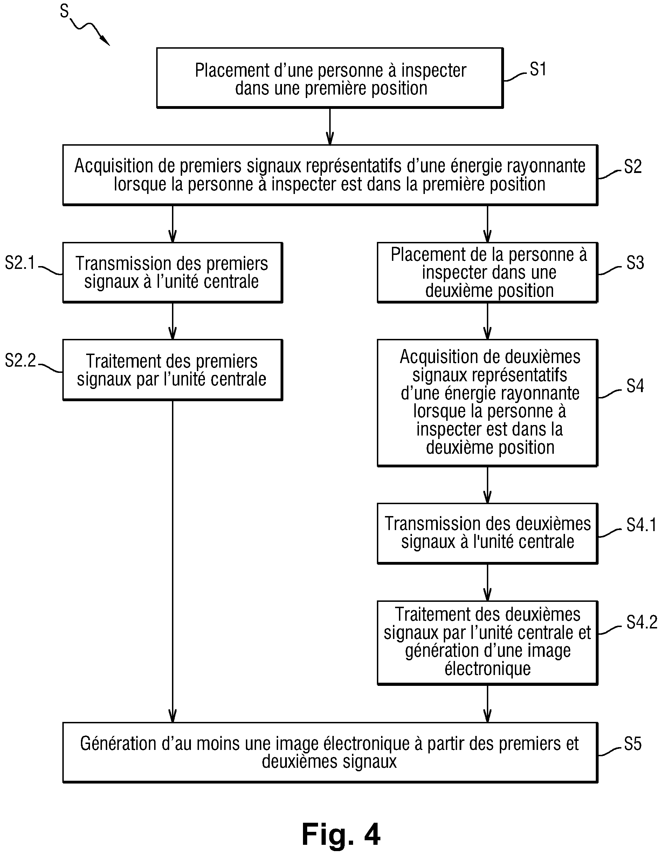

De plus, et toujours pour réduire la durée totale du procédé de détection, l'unité centrale 6 traite les premiers signaux dès leur réception (étape S2.2). Plus précisément, l'unité centrale 6 traite les premiers signaux avant la réception des deuxièmes signaux (voir Figure 4). Ainsi, l'unité centrale 6 commence le traitement des premiers signaux pendant le passage de la personne à inspecter de la première position à la deuxième position et, le cas échéant, pendant l'acquisition des deuxièmes signaux. De la sorte, lorsque l'unité centrale 6 reçoit les deuxièmes signaux, les premiers signaux sont déjà traités en tout ou partie (selon la durée de traitement des premiers signaux et la durée de réalisation des étapes S3 et S4), ce qui lui permet de démarrer immédiatement le traitement des deuxièmes signaux. Les résultats du traitement des premiers et des deuxièmes signaux est donc plus rapide.

A titre d'exemple non limitatif, on notera que :
- l'acquisition (étape S2) des premiers et des deuxièmes signaux peut durer typiquement entre 0.05 secondes et 0.5 secondes;
- la transmission (étapes S2.1 et S4.1) des premiers signaux et des deuxièmes signaux des antennes microondes 5 à l'unité centrale 6 peut durer typiquement entre 0.05 secondes et 0.5 secondes ;
- le traitement (étapes S2.2 t S4.2) des premiers signaux et des deuxième signaux peut durer entre deux secondes et quatre secondes.

La transmission et le traitement (étapes S2.1 et S2.2) des premiers signaux avant et/ou simultanément à la transmission (étape S4.1) des deuxièmes signaux réduit donc de deux à six secondes la durée totale du procédé de détection S. Il en découle que, le temps que la personne inspectée sorte du détecteur 1, l'agent de sûreté dispose déjà du résultat du traitement des signaux par l'unité centrale 6. Il n'est donc pas nécessaire de faire attendre la personne inspectée. De plus, le détecteur 1 devient immédiatement disponible pour l'inspection d'une nouvelle personne à inspecter dès la sortie de la personne qui vient d'être inspectée par le détecteur 1.

Le procédé S de détection de l'invention est donc plus efficace, car capable d'inspecter de manière fiable toutes les parties du corps d'une personne à inspecter, sans nécessiter d'augmenter la sensibilité du détecteur 1 ni la durée du procédé S de détection.

Optionnellement, le détecteur 1 comprend en outre un écran 11 configuré pour afficher une image électronique générée par l'unité centrale 6. L'écran 11 peut être monté sur le détecteur 1, par exemple sur l'un des panneaux latéraux 2 à la sortie du détecteur 1, ou en variante placé à distance et communiquer via une interface sans fil ou filaire avec l'unité de centrale. En variante, un écran 11 peut être monté sur chaque panneau latéral 2.

Dans une forme de réalisation illustrée sur les figures 1 et 2, afin d'augmenter l'efficacité de détection et notamment la capacité d'exploration de la personne inspectée par le détecteur 1, la face interne 3 des panneaux peut être courbe, le centre de la courbure étant placé en face de la face interne 3. Plus précisément, dans cette forme de réalisation, la courbure des faces internes 3 des panneaux latéraux 2 est telle que la distance entre les faces internes 3 dans un plan perpendiculaire au plan central P augmente progressivement depuis l'entrée du détecteur 1 jusqu'à une distance maximale, puis diminue progressivement en direction de la sortie du détecteur 1. En variante, les faces internes 3 peuvent être planes par morceaux, les tronçons formant ensemble un canal divergeant puis convergeant, de l'entrée vers la sortie. Pour cela, les faces internes 3 peuvent par exemple chacune comprendre successivement au moins un tronçon plan incliné par rapport au plan central P de sorte que le passage diverge (par rapport en sens de passage dans le détecteur 1, c'est-à-dire de l'entrée vers la sortie du passage), puis un tronçon plan sensiblement parallèle au plan central P et au moins un tronçon incliné par rapport au plan central P de sorte que le passage converge vers la sortie.

Comme cela ressort des figures, la surface de la personne inspectée susceptible d'être atteinte par les ondes microondes est plus grande lorsque la face interne 3 des parois latérales est courbe (de manière continue ou par morceaux), ce qui augmente encore la fiabilité de la détection.

Dans une première forme de réalisation, l'unité centrale 6 réalise une unique image électronique à partir des premiers signaux et des deuxièmes signaux (étape S5). L'unique image électronique reproduit donc l'ensemble des informations obtenues par l'unité centrale 6 à partir des premiers signaux et des deuxièmes signaux. Lorsque ces premiers et deuxièmes signaux sont générés par des antennes microondes 5 présentes dans les deux panneaux latéraux 2, l'unique image électronique est une représentation des éléments identifiés par le détecteur 1 sur toute la circonférence (360°) de la personne inspectée et comprend donc la face avant, la face arrière et les faces latérales de la personne inspectée. L'agent de sûreté dispose donc, dans une seule et même image, de toutes les informations nécessaires pour inspecter la personne.

Cette unique image électronique peut être du type elliptique (en trois dimensions) ou développée (en deux dimensions).

Dans une deuxième forme de réalisation, l'unité centrale 6 réalise une ou plusieurs premières images électroniques à partir des premiers signaux (une par panneau latéral 2 comprenant des antennes microondes 5) et une ou plusieurs deuxièmes images électroniques à partir des deuxièmes signaux (une par panneau latéral 2 comprenant des antennes microondes 5) (étape S5). Ces images électroniques peuvent être affichées successivement sur l'écran, ou en variante fusionnées pour obtenir une unique image électronique qui sera affichée sur l'écran.

Lorsqu'une cible est identifiée par l'unité centrale 6, ladite cible est affichée dans l'image électronique et une alarme (sonore et/ou visuelle) peut être générée par le détecteur 1.

En variante, afin de respecter l'intimité des personnes inspectées, le système peut comprendre un logiciel comprenant des instructions de code pour analyser automatiquement l'image et déterminer la présence d'éventuelles anomalies et les afficher sur un avatar représentant la personne.

## Revendications

1. Procédé de détection (S) d'un objet cible à l'aide d'un détecteur (1) à énergie rayonnante, dans lequel le détecteur (1) comprend deux panneaux latéraux (2) opposés, lesdits panneaux latéraux (2) étant fixes et délimitant ensemble un passage,
le procédé de détection (S) comprenant les étapes suivantes :
S1 : placement d'une personne à inspecter dans une première position au sein du passage entre les panneaux latéraux (2) du détecteur (1) ;
S2 : acquisition de premiers signaux représentatifs d'une énergie rayonnante lorsque la personne à inspecter est dans la première position ;
S3 : placement de la personne à inspecter dans une deuxième position au sein du passage entre les panneaux latéraux (2) du détecteur (1), la deuxième position étant différente de la première position ; et
S4 : acquisition de deuxièmes signaux représentatifs d'une énergie rayonnante lorsque la personne à inspecter est dans la deuxième position : et
S5 : à partir des premiers signaux et des deuxième signaux, réalisation d'une image électronique de sorte à déterminer si la personne à inspecter porte un objet cible ;
dans lequel, au cours de l'une parmi les étapes S1 et S3, la personne à inspecter est placée face à l'un des panneaux latéraux (2), et au cours de l'autre parmi les étapes S1 et S3 la personne à inspecter est placée perpendiculairement aux panneaux latéraux (2).

2. Procédé de détection (S) selon la revendication 1, dans lequel, entre la première position et la deuxième position, la personne inspectée pivote sur elle-même suivant un angle qui est différent de 180°.

3. Procédé de détection (S) selon l'une des revendications 1 et 2, comprenant en outre, préalablement à l'étape S3, une étape S6 d'envoi d'instructions à la personne inspectée pour la faire passer de la première position à la deuxième position.

4. Procédé de détection (S) selon la revendication 3, dans lequel, au cours de l'étape S6, les instructions sont visuelles et/ou sonores.

5. Procédé de détection (S) selon l'une des revendications 3 ou 4, dans lequel les instructions sont envoyées par une unité centrale (6) du détecteur (1).

6. Procédé de détection (S) selon l'une des revendications 4 ou 5, dans lequel les instructions sont envoyées par une unité centrale (6) du détecteur (1), au cours de l'étape S1, la personne à inspecter est placée face à l'un des panneaux latéraux (2), et au cours de l'étape S3 la personne à inspecter est placée perpendiculairement aux panneaux latéraux (2).

7. Procédé de détection (S) selon l'une des revendications 1 à 6, dans lequel, au cours de l'étape S1 et/ou S3, la personne inspectée place ses bras à distance de son corps.

8. Procédé de détection (S) selon l'une des revendications 1 à 7, comprenant en outre une étape de traitement (S2.2 ; S4.2 ; S5) par une unité centrale (6) des premiers signaux et des deuxièmes signaux de sorte à détecter un objet cible porté par la personne à inspecter.

9. Procédé de détection (S) selon la revendication 8, dans lequel les premiers signaux sont transmis (S2.1) à l'unité centrale (6) préalablement à l'étape S4.

10. Procédé de détection (S) selon la revendication 9, dans lequel les premiers signaux sont traités (S2.2) pendant tout ou partie des étapes S3 et S4.

11. Procédé de détection (S) selon l'une des revendications 8 à 10, dans lequel, l'unité centrale (6) combine les premiers signaux et les deuxièmes signaux de sorte à générer une image électronique unique de la personne à inspecter.

12. Détecteur (1) à énergie rayonnante comprenant :
- deux panneaux latéraux (2) opposés fixes l'un par rapport à l'autre et délimitant ensemble un passage ;
- des transducteurs à énergie rayonnante (5), par exemple des antennes microondes, logés dans au moins un des panneaux latéraux (2) ; et
- une unité centrale (6) configurée pour mettre en oeuvre un procédé de détection (S) selon l'une des revendication 1 à 11.

13. Détecteur (1) selon la revendication 12, comprenant en outre un indicateur (7) visuel et/ou sonore, l'unité centrale (6) étant configurée pour envoyer des instructions à l'indicateur (7) visuel et/ou sonore pour faire passer une personne à inspecter de la première position à la deuxième position.

14. Détecteur (1) selon la revendication 13, dans lequel l'indicateur (7) visuel comprend l'un au moins des moyens suivants :
- une ou plusieurs lumières (8, 9) placée(s) dans une plateforme (4) s'étendant entre les panneaux latéraux (2) ;
- un projecteur configuré pour projeter une ou plusieurs images sur la plateforme (4) et/ou sur au moins un panneau latéral (2) ;
- un haut-parleur (10) configuré pour émettre un message sonore à l'attention de la personne à inspecter.

15. Détecteur (1) selon l'une des revendications 12 à 14, dans lequel les panneaux latéraux (2) présentent chacune une face interne (3) orientée vers le panneau latéral (2) opposé, lesdites faces internes étant courbes.

## Patentansprüche

1. Verfahren zum Detektieren (S) eines Zielobjekts mithilfe eines Detektors (1) mit Strahlungsenergie, wobei der Detektor (1) zwei gegenüberliegende Seitenplatten (2) umfasst, wobei die Seitenplatten (2) feststehend sind und gemeinsam einen Durchgang begrenzen,
wobei das Verfahren zum Detektieren (S) die folgenden Schritte umfasst:
S1: Platzieren einer zu inspizierenden Person in eine erste Position innerhalb des Durchgangs zwischen den Seitenplatten (2) des Detektors (1);
S2: Erfassen erster Signale, die repräsentativ für eine Strahlungsenergie sind, wenn die zu inspizierende Person in einer ersten Position ist;
S3: Platzieren der zu inspizierenden Person in eine zweite Position innerhalb des Durchgangs zwischen den Seitenplatten (2) des Detektors (1), wobei sich die zweite Position von der ersten Position unterscheidet; und
S4: Erfassen zweiter Signale, die repräsentativ für eine Strahlungsenergie sind, wenn die zu inspizierende Person in einer zweiten Position ist; und
S5: Erstellen aus den ersten Signalen und den zweiten Signalen eines elektronischen Bildes, um zu bestimmen, ob die zu inspizierende Person ein Zielobjekt trägt;
wobei im Laufe des einen aus den Schritten S1 und S3 die zu inspizierende Person gegenüber einer der Seitenplatten (2) platziert wird, und im Laufe des anderen aus den Schritten S1 und S3 die zu inspizierende Person senkrecht zu den Seitenplatten (2) platziert wird.

2. Verfahren zum Detektieren (S) nach Anspruch 1, wobei die inspizierte Person zwischen der ersten Position und der zweiten Position in einem Winkel um sich selbst schwenkt, der sich von 180° unterscheidet.

3. Verfahren zum Detektieren (S) nach einem der Ansprüche 1 und 2, das weiter vor dem Schritt S3 einen Schritt S6 zum Senden von Anweisungen an die inspizierte Person umfasst, um sie von der ersten Position in die zweite Position übergehen zu lassen.

4. Verfahren zum Detektieren (S) nach Anspruch 3, wobei die Anweisungen im Laufe des Schrittes S6 visuell und/oder akustisch sind.

5. Verfahren zum Detektieren (S) nach einem der Ansprüche 3 oder 4, wobei die Anweisungen über eine Zentrale (6) des Detektors (1) gesendet werden.

6. Verfahren zum Detektieren (S) nach einem der Ansprüche 4 oder 5, wobei die Anweisungen durch eine Zentraleinheit (6) des Detektors (1) im Laufe des Schrittes S1 gesendet werden, wobei die zu inspizierende Person gegenüber einer der Seitenplatten (2) platziert wird, und die zu inspizierende Person im Laufe des Schrittes S3 senkrecht zu den Seitenplatten (2) platziert wird.

7. Verfahren zum Detektieren (S) nach einem der Ansprüche 1 bis 6, wobei die inspizierte Person im Laufe des Schrittes S1 und/oder S3 ihre Arme im Abstand von ihrem Körper platziert.

8. Verfahren zum Detektieren (S) nach einem der Ansprüche 1 bis 7, das weiter einen Schritt zum Verarbeiten (S2.2; S4.2; S5) der ersten Signale und der zweiten Signale durch eine Zentraleinheit (6) umfasst, um ein Zielobjekt zu detektieren, das von der zu inspizierenden Person getragen wird.

9. Verfahren zum Detektieren (S) nach Anspruch 8, wobei die ersten Signale vor dem Schritt S4 an eine Zentraleinheit (6) übertragen (S2.1) werden.

10. Verfahren zum Detektieren (S) nach Anspruch 9, wobei die ersten Signale während der gesamten oder einem Teil der Schritte S3 und S4 verarbeitet (S2.2) werden.

11. Verfahren zum Detektieren (S) nach einem der Ansprüche 8 bis 10, wobei die Zentraleinheit (6) die ersten Signale und die zweiten Signale kombiniert, um ein eindeutiges elektronisches Bild der zu inspizierenden Person zu erzeugen.

12. Detektor (1) mit Strahlungsenergie, umfassend:
- zwei gegenüberliegende Seitenplatten (2), die in Bezug zueinander feststehend sind und gemeinsam einen Durchgang begrenzen;
- Strahlungsenergiewandler (5), beispielsweise Mikrowellenantennen, die in mindestens einer der Seitenplatten (2) untergebracht sind; und
- eine Zentraleinheit (6), die konfiguriert ist, um ein Verfahren zum Detektieren (S) nach einem der Ansprüche 1 bis 11 auszuführen.

13. Detektor (1) nach Anspruch 12, der weiter eine optische und/oder akustische Anzeige (7) umfasst, wobei die Zentraleinheit (6) konfiguriert ist, um Anweisungen an die optische und/oder akustische Anzeige (7) zu senden, um eine zu inspizierende Person von der ersten Position in die zeite Position übergehen zu lassen.

14. Detektor (1) nach Anspruch 13, wobei die optische Anzeige (7) mindestens eines der folgenden Mittel umfasst:
- eine oder mehrere Leuchten (8, 9), die in einer Plattform (4) platziert ist/sind, die sich zwischen den Seitenplatten (2) erstreckt;
- einen Projektor, der konfiguriert ist, um ein oder mehrere Bilder auf die Plattform (4) und/oder auf mindestens eine Seitenplatte (2) zu projizieren;
- einen Lautsprecher (10), der konfiguriert ist, um eine Sprachnachricht an die zu inspizierende Person auszugeben.

15. Detektor (1) nach einem der Ansprüche 12 bis 14, wobei die Seitenplatten (2) jeweils eine zur gegenüberliegenden Seitenplatte (2) ausgerichtete Innenseite (3) aufweisen, wobei die Innenseiten gekrümmt sind.

## Claims

1. A method (S) of detecting a target object using a radiant energy detector (1), wherein the detector (1) comprises two opposing side panels (2), said side panels (2) being fixed and together delimiting a passage,
the detection method (S) comprising the following steps:
S1: placing a person to be inspected in a first position within the passage between the side panels (2) of the detector (1);
S2: acquiring first signals representative of radiant energy when the person to be inspected is in the first position;
S3: placing the person to be inspected in a second position within the passage between the side panels (2) of the detector (1), the second position being different from the first position; and
S4: acquiring second signals representative of radiant energy when the person to be inspected is in the second position; and
S5: from the first signals and the second signals, making an electronic image so as to determine whether the person to be inspected is carrying a target object;
wherein in one of steps S1 and S3 the person to be inspected is positioned facing one of the side panels (2), and in the other of steps S1 and S3 the person to be inspected is positioned perpendicular to the side panels (2).

2. Detection method (S) according to claim 1, wherein, between the first position and the second position, the inspected person pivots on himself through an angle which is different from 180°.

3. Detection method (S) according to one of claims 1 and 2, further comprising, prior to step S3, a step S6 of sending instructions to the inspected person in order to move him from the first position to the second position.

4. Detection method (S) according to claim 3, wherein, during step S6, the instructions are visual and/or audible.

5. Detection method (S) according to one of claims 3 or 4, wherein the instructions are sent by a central unit (6) of the detector (1).

6. Detection method (S) according to one of claims 4 or 5, wherein the instructions are sent by a central unit (6) of the detector (1), during step S1, the person to be inspected is placed facing one of the side panels (2), and during step S3 the person to be inspected is placed perpendicular to the side panels (2).

7. Detection method (S) according to one of claims 1 to 6, wherein, during step S1 and/or S3, the person being inspected places his/her arms at a distance from his/her body.

8. Detection method (S) according to one of claims 1 to 7, further comprising a step of processing (S2.2; S4.2; S5) by a central unit (6) the first signals and the second signals so as to detect a target object worn by the person to be inspected.

9. Detection method (S) according to claim 8, wherein the first signals are transmitted (S2.1) to the central unit (6) prior to step S4.

10. Detection method (S) according to claim 9, wherein the first signals are processed (S2.2) during all or part of steps S3 and S4.

11. Detection method (S) according to one of claims 8 to 10, wherein the central unit (6) combines the first signals and the second signals so as to generate a single electronic image of the person to be inspected.

12. Radiant energy detector (1) comprising:
- two opposite side panels (2) fixed relative to each other and together delimiting a passage;
- radiant energy transducers (5), for example microwave antennas, housed in at least one of the side panels (2); and
- a central unit (6) configured to implement a detection method (S) according to one of claims 1 to 11.

13. Detector (1) according to claim 12, further comprising a visual and/or audible indicator (7), the central unit (6) being configured to send instructions to the visual and/or audible indicator (7) to move a person to be inspected from the first position to the second position.

14. Detector (1) according to claim 13, wherein the visual indicator (7) comprises at least one of the following means:
- one or a plurality of lights (8, 9) placed in a platform (4) extending between the side panels (2);
- a projector configured to project one or more images onto the platform (4) and/or onto at least one side panel (2);
- a loudspeaker (10) configured to emit an audible message for the attention of the person to be inspected.

15. Detector (1) according to one of claims 12 to 14, wherein the side panels (2) each have an internal face (3) facing the opposite side panel (2), said internal faces being curved.
